# EUROPEAN PATENT SPECIFICATION

(11) **EP 1 816 409 B1**
(45) Date of publication and mention of the grant of the patent: **27.07.2011**
(21) Application number: 07002135.7
(22) Date of filing: 31.01.2007
(51) Int. Cl.: F24F 3/16

(54) **Air filtering apparatus and control method therefor**
Luftfiltervorrichtung und Steuerverfahren dafür
Appareil de filtrage d'air et son procédé de commande

(30) Priority: 01.02.2006 JP 2006024426
(43) Date of publication of application: 08.08.2007
(73) Proprietor: SANYO ELECTRIC CO., LTD., Moriguchi-shi Osaka 570-8667 (JP)
(72) Inventor: Dobashi, Mitsuhiro, Kumagaya-shi, Saitama 360-0033 (JP); Yamamoto, Tetsuya, Ota-shi, Gunma 373-0806 (JP)
(74) Representative: Glawe, Delfs, Moll

(56) References cited:
- WO-A1-01/90001
- JP-A- 62 069 033
- JP-A- 2000 257 913
- JP-A- 2000 334 240
- JP-A- 2002 181 358
- US-A1- 2005 072 308

## Description

### BACKGROUND OF THE INVENTION

### 1. Field of the Invention

The present invention relates to an air filtering apparatus that can remove microorganisms such as virus, bacteria, fungus (mold), etc. floating in the air, and a control method therefore.

### 2. Description of the Related Art

There has been proposed an air filtering apparatus for generating electrolytic water containing active oxygen specifies by electrolyzing water such as tap water (city water) or the like, and diffusing electrolytic water mist of the generated electrolytic water into the air so that the electrolytic water mist is brought into direct contact with microorganisms such as virus, bacterial, fungus, etc. floating in the air, thereby inactivating (removing, sterilizing, etc.) virus, etc. (see JP-A-2002-181358, JP-2000 257913, for example).

In the above-described air filtering apparatus, since a large difference in concentration occurs between water before electrolysis and water after electrolysis, dispersion occurs in the concentration of active oxygen specifies in accordance with before or after water exchange is carried out, so that the air filtering effect may be lowered.

### SUMMARY OF THE INVENTION

Therefore, an object of the present invention is to provide an air filtering apparatus that control the concentration of active oxygen specifies contained in electrolytic water to a target concentration with high precision, and a method of controlling the air filtering apparatus.

In order to attain the above object, an air filtering apparatus comprises: air filtering means (12) for generating electrolytic water containing active oxygen specifies by electrolyzing water, supplying the electrolytic water to a gas-liquid contact member, blowing indoor air to the gas-liquid contact member so as to be brought into contact with the electrolytic water, and blowing out the indoor air to a room; and switching means (30) for switching an operation mode of electrolysis between a first operation mode for electrolyzing pre-electrolysis water so that the concentration of the active oxygen specifies approaches to a target concentration, and a second operation mode for electrolyzing post-electrolysis water so that the concentration of the active oxygen specifies approaches to a target concentration.

The air filtering apparatus further comprises water exchange detecting means (30) for detecting whether water in the air filtering means is exchanged or not, wherein the switching means sets the operation mode for electrolysis to the first operation mode in the initial operation after it is detected by the water exchange detecting means that water is exchanged.

In the air filtering apparatus, the switching means sets the operation mode for electrolysis to the first operation mode when a lapse time from the previous electrolysis elapses a predetermined time at which it is estimated that the concentration of the active oxygen specifies is the same level as the pre-electrolysis water.

In the air filtering apparatus, the switching means sets the operation mode for electrolysis to the second operation mode when a lapse time from the previous electrolysis elapses a predetermined time at which it is estimated that the concentration of the active oxygen specifies is larger than that of the pre-electrolysis water and also smaller than the target concentration.

The air filtering apparatus further comprises the electric conductivity of water in the air filtering means (30), and storing means (35) for storing first information to specify a control time for generating the active oxygen specifies of the target concentration from the electric conductivity of the pre-electrolysis water, and second information to specify a control time for generating the active oxygen specifies of the target concentration from the electric conductivity of the post-electrolysis water, wherein in the first operation mode, the water in the air filtering means is electrolyzed for the control time based on the first information, and in the second operation mode the water in the air filtering means is electrolyzed for the control time based on the second information.

A method of controlling an air filtering apparatus for generating electrolytic water containing active oxygen specifies by electrolyzing water, supplying the electrolytic water to a gas-liquid contact member, blowing indoor air to the gas-liquid contact member so that the indoor air is brought into contact with the electrolytic water, and blowing out the indoor air to a room is characterized by comprising a step of switching an operation mode for electrolysis between a first operation mode for electrolyzing pre-electrolysis water so that the concentration of the active oxygen specifies approaches to a target concentration, and a second operation mode for electrolyzing post-electrolysis water so that the concentration of the active oxygen specifies approaches to a target concentration.

According to the present invention, the operation mode is switched between the pre-electrolysis water and the post-electrolysis water, so that the concentration of the active oxygen specifies contained in the electrolytic water can be controlled to the target concentration with high precision.

### BRIEF DESCRIPTION OF THE DRAWINGS

Fig. 1 is a perspective view showing an embodiment of an air filtering apparatus of the present invention;
Fig. 2 is a perspective view showing the internal construction of the air filtering apparatus shown in Fig. 1;
Fig. 3 is a longitudinally-sectional view showing a housing of the air filtering apparatus;
Fig. 4 is a cross-sectional view showing a gas-liquid contact member of the air filtering apparatus;
Figs. 5A and 5B are systematic diagrams showing means for dropping electrolytic water to the gas-liquid contact member, wherein Fig. 5A is a side view and Fig. 5B is a diagram showing the construction of an electrolytic bath;
Fig. 6 is a block diagram showing the construction of a controller;
Fig. 7 is a diagram showing an electrolysis control time for each range of electric conductivity in a startup operation mode;
Fig. 8 is a diagram showing an electrolysis control time for each range of electric conductivity in a stationary operation mode;
Fig. 9 is a flowchart showing the operation processing when the operation mode is switched; and
Fig. 10 is a diagram showing a characteristic curved line showing the association between the electric conductivity and the concentration of chlorine.

### DETAILED DESCRIPTION OF THE PREFERRED EMBODIMENT

A preferred embodiment according to the present invention will be described hereunder with reference to the accompanying drawings.

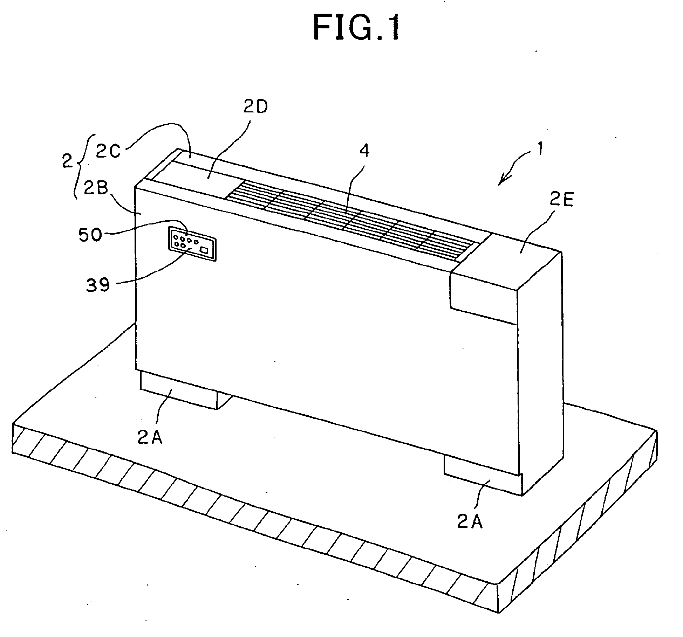

Fig. 1 shows a floor mount type air filtering apparatus 1. The floor mount type air filtering apparatus 1 has a box-shaped housing 2. The housing 2 contains leg pieces 2A, a front panel 2B and a top panel 2C, and an operation lid 2D and an opening/closing lid 2E are disposed at both the sides of the top panel 2C in juxtaposition with each other in the lateral direction. Furthermore, an informing panel 39 having plural LEDs 50 for informing various kinds of information is disposed at the upper portion of the left side of the front panel 2B.

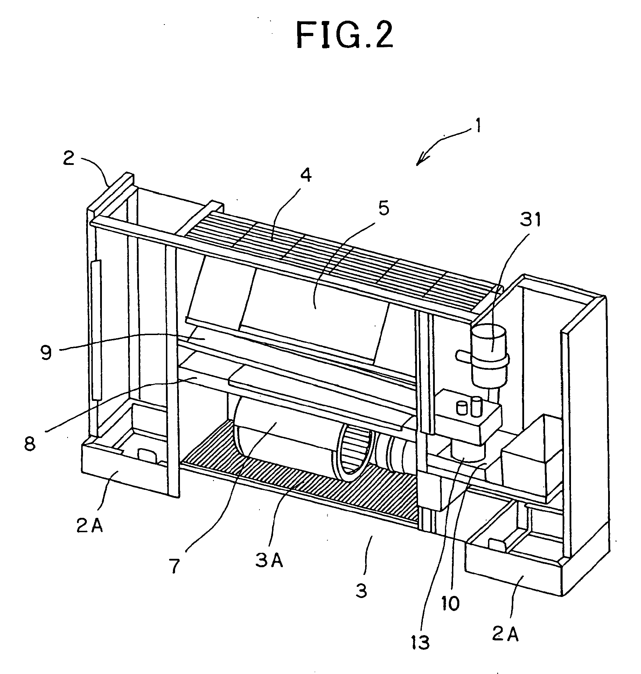

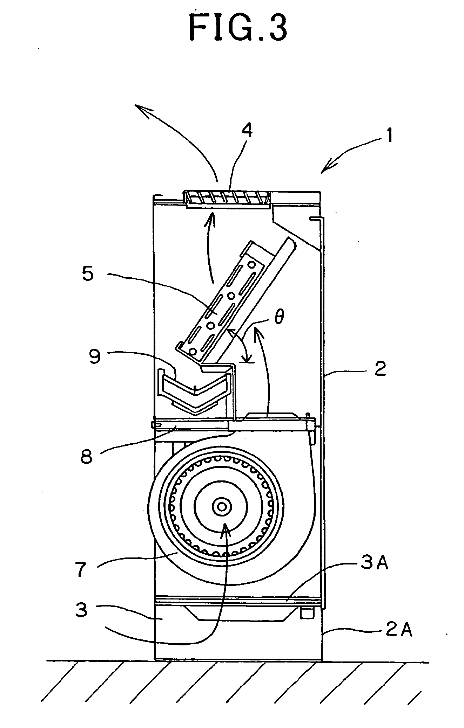

As shown in Fig. 2, an air suction port 3 is disposed at the lower portion of the housing 2, and a pre-filter 3A is disposed above the air suction port 3. Furthermore, an air blowing fan 7 is disposed above the pre-filter 3A and supported through a support plate 8 by the housing. A gas-liquid contact member 5 having high water retention capability is disposed above the support plate 8 so as to be tilt as shown in Fig. 3. Furthermore, a water receiving tray 9 is disposed between the gas-liquid contact member 5 and the air blowing fan 7, and an laterally-elongated air blowingport 4 is disposed above the gas-liquid contact member 5.

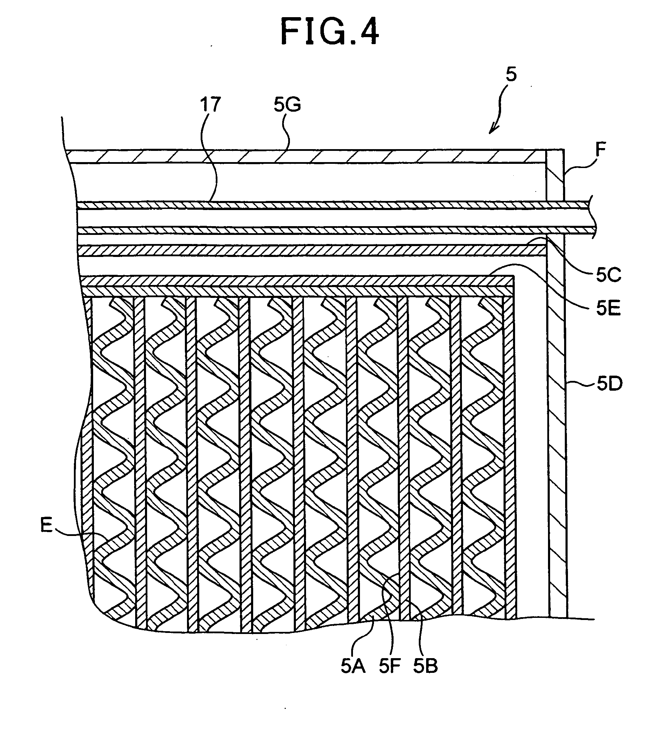

As shown in Fig. 4, the gas-liquid contact member 5 is constructed by an element portion E through which air flows and a frame portion F for supporting the element portion E.

The element portion E is constructed by laminating corrugated plate type members 5A having a corrugated plate shape and flat plate type members 5B. Therefore, a plurality of substantially triangular opening ports 5F are formed between each corrugated plate type member 5A and each flat type member 5B.

The frame portion F contains a pair of frame members 5D constituting both the end frames of the gas-liquid contact member 5, an electrolytic water supply pipe 17 that penetrates through the upper portion of one of the frame members 5D and fixed to the other frame member 5D at the tip thereof, and a cover 5G that is fixed between the upper end portions of the pair of frame members 5D so as to cover the electrolytic water supply pipe 17 and constitutes the upper frame of the gas-liquid contact member 5. The cover 5G supports a first distributing sheet 5C disposed below the electrolytic water supply pipe 17. The element portion E is disposed between the pair of frame members 5D, and plural second distributing sheets 5E are disposed on the upper surface of the element portion E.

The corrugated plate type members 5A, the flat plate type members 5B, the first distributing sheet 5C and the second distributing sheets 5E are formed of fiber material having a liquid-permeable property. Electrolytic water discharged from many water spray holes (not shown) formed in the electrolytic water supply pipe 17 is dropped to the first distributing sheet 5C. Accordingly, the dropped electrolytic water is diffused to the whole area of the first distributing sheet 5c, and then falls to the whole upper surface of the element portion E. The falling electrolytic water infiltrates through the second distributing sheet 5E, and diffuses to the whole area of the second distributing sheet 5E, so that the electrolytic water is supplied to the whole upper portion of the element portion E. Accordingly, the electrolytic water infiltrates all over in the corrugated plate type members 5A and the flat type members 5B of the element portion E.

Here, raw material having little deterioration to electrolytic water, for example, polyolefin resin (polyethylene resin, polypropylene resin or the like), PET (polyethylene terephthalate) resin, vinyl chloride resin, fluorinated resin (PTFE, PFA, ETFE or the like), ceramic material or the like is used as the raw materials of the corrugated plate type members 5A, the flat plate type members 5B, the first distributing sheet 5C and the second distributing sheet 5E. PET resin is used in this embodiment. Electrolytic water has a fungicidal property, and thus it is unnecessary to coat fungicide on the gas-liquid contact member 5.

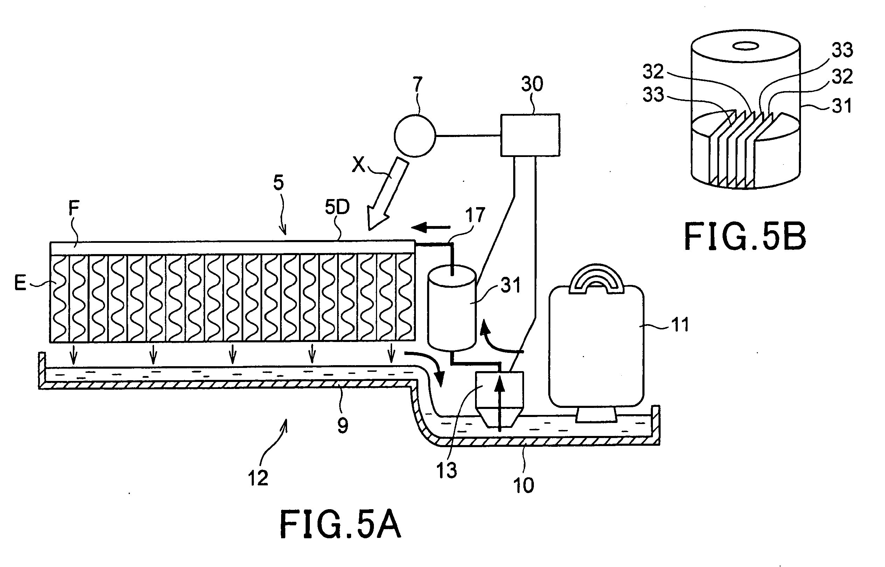

Figs. 5A and 5B show an electrolytic water supply mechanism for dropping electrolytic water to the gas-liquid contact member 5.

A water receiving tray 9 is disposed below the gas-liquid contact member 5, and a water supplying support tank support tray 10 intercommunicates with the water receiving tray 9. Awater supply tank 11 for supplying water containing chlorine ions (the water may be tap water or the like) and a circulating pump 13 are disposed on the support tray 10. An electrolytic bath 31 is connected to the circulating pump 13 and an electrolytic water supply pipe 17 is connected to the electrolytic bath 31.

As shown in Fig. 5A, the electrolyticbath 31 is disposed above the water receiving tray 9 and the water supply tank support tray 10. When the operation of the circulating pump 13 is started, water pumped up from the water supply tank support tray 10 is stocked in the electrolytic bath 31, and when the operation of the circulating pump 13 is stopped, the water in the electrolytic bath 31 naturally drops to the water supply tank support tray 10 by gravitation, so that the electrolytic bath 31 is empty.

As shown in Fig. 5, at least one pair of electrodes 32 and 33 which serve as an anode and a cathode are disposed (alternately disposed in the case of use of two or more pairs) in the electrolytic bath 31, and when current is supplied to the electrodes 32 and 33, water (tap water) flowing in the electrolytic bath 31 is electrolyzed to generate active oxygen specifies. Here, the active oxygen species means oxygen molecules having higher oxidizing activity than normal oxygen and also related substance thereof, and contain not only so-called narrowly-defined active oxygen such as superoxide anion, singlet oxygen, hydroxyl radical and hydrogenperoxide, but also so-calledbroadly-defined active oxygen such as ozone, hypochlorous acid, etc. The electrolytic bath 31 is disposed in proximity to the gas-liquid contact member 5, and it is designed so as to immediately supply the gas-liquid contact member 5 with active oxygen specifies generated by electrolyzing water (tap water).

The electrodes 32, 33 are electrode plates each of which comprises a base of Ti (titan) and a coated layer of Ir (iridium), Pt (platinum). The current value applied to the electrodes 32, 33 is set so as to be equal to several MA (milliampere)/cm² (square centimeter) to several tens mA /cm², and a predetermined concentration of free residual chlorine (for example, 1 mg/l liter) is generated, for example.

When current is supplied to tap water by the electrodes 32, 33, the following reaction occurs at the cathode:

4H⁺ + 4e⁻ + (4OH⁻) → 2H₂ + (4OH⁻)

Furthermore, the following reaction occurs at the anode:

2H₂O → 4H⁺ + O₂ + 4e⁻

At the same time, chlorine ions contained water (chlorine ions are added in tap water in advance) reacts as follows:

2Cl⁻ → Cl₂ + 2e⁻

Furthermore, Cl₂ thus generated reacts with water as follows:

Cl₂ + H₂O → HClO + HCl

In this construction, by supplying current to the electrodes 32, 33, HClO (hypochlorous acid) having strong sterilizing power is generated. Therefore, air is passed through the gas-liquid contact member 5 supplied with this hypochlorous acid, thereby preventing breeding of various bacteria in the gas-liquid contact member 5. Accordingly, virus, bacteria, etc. floating in the air passing through the gas-liquid contact member 5 can be inactivated. Furthermore, when odor components pass through the gas-liquid contact member 5, the odor components also react with hypochlorous acid in the electrolytic water, and they are ionized and dissolved, whereby the odor components can be removed from air and the air is deodorized. That is, the electrolytic bath 31, the gas-liquid contact member 5, the air blowing fan 7 and the circulating pump 13 constitutes the air filtering mechanism (air filtering means) 12.

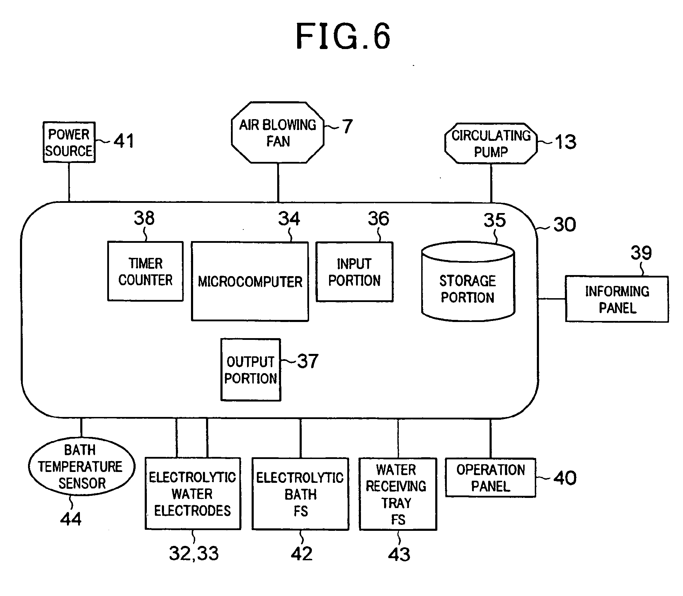

The floor-mount type air filtering apparatus 1 is equipped with a controller 30 for centrically controlling each part of the floor-mount type air filtering apparatus 1. Fig. 6 is a block diagram showing the controller 30 and the peripheral construction.

The controller 30 is equipped with a microcomputer 34, a storage portion 35, an input portion 36, an output portion 37 and a timer counter 38, and it inputs various instructions from a user through an operation panel 40 exposed to the outside when an operating lid 2D is opened.

The operation panel 40 is equipped with a water exchange button switch, and it is operated when the user exchange water in the air filtering apparatus 12. By detecting the operation of the water exchange button switch, the controller 30 detects water exchange.

The microcomputer 34 controls the electrolytic bath 31, the air blowing fan 7, the circulating pump 13, etc. on the basis of control programs stored in advance in the storage 35 as a non-volatile memory such as EEPROM or the like.

The input portion 36 is an interface for receiving detection signals from the electrodes 32, 33, the bath temperature sensor 44, an electrolytic bath float switch 42 and a water receiving tray float switch 43, and it functions as power supply means for outputting power to the electrodes 32, 33.

The microcomputer 34 issues a water supply request when it receives a no-water detection signal from the water receiving tray float switch 43 through the input portion 36, and turns on a water supply informing lamp (not shown) disposed on the informing panel 39.

The timer counter 38 counts the lapse time after the previous electrolysis operation is finished (hereinafter referred to as electrolysis stop time t0) under the control of the controller 30.

The microcomputer 22, the storage portion, the input portion 36, the output portion 37 and the timer counter 38 are mounted on a board, and accommodated in an electrical component box (not shown).

Next, the power source 41, the bath temperature sensor 44, the electrolytic bath float switch 42, the water receiving tray float switch 43, the electrodes 32, 33 and the informing panel 39 which are connected to the controller 30 will be described.

The power source 41 is a power source for operating the floor mount type air filtering apparatus, and when the power source switch of the operation panel 40 is turned on, operating power is supplied to each part of the floor mount type air filtering apparatus 1. The bath temperature sensor 44 is disposed in the electrolytic bath 31 to detect the temperature of electrolytic water in the electrolytic bath 31.

The electrolytic bath float switch 42 detects whether electrolytic water having a predetermined permissible water level or more exists in the electrolytic bath 31, thereby detecting the presence or absence of water in the electrolytic bath 31.

The water receiving tray float switch 43 detects whether electrolytic water having a predetermined permissible water level exists in the water receiving tray 9, thereby detecting the presence or absence of water in the electrolytic bath 31.

The electrodes 32, 33 provided to the electrolytic bath 31 are used not only for electrolysis of water such as tap water or the like, but also as detection electrodes for detecting the electric conductivity of electrolytic water.

The informing panel 39 has plural LEDs 50, and functions as informing means for informing that the apparatus is under operation and making various kinds of warnings. At the upper stage of the informing panel 39 (Fig. 1) are provided a green lamp as LED 50 for informing that the apparatus is under operation, a red lamp as LED 50 for promoting water supply to the water supply tank 11, a red lamp as LED 50 for informing the maintenance timing of the pre-filter 3A, and a red lamp as LED 50 for promoting water exchange of the water receiving tray 9. Furthermore, At the lower stage of the informing panel 39 are provided a red lamp (Fig. 1) for informing the maintenance timing in connection with deterioration of the electrodes 32, 33, and a red lamp (Fig. 1) for informing the maintenance timing in connection with deterioration of the gas-liquid contact member 5.

Next, the operation of the floor-mount type air filtering apparatus 1 during the air filtering operation will be described.

In Fig. 1, when the operating lid 2D is opened, the operating panel 40 (not shown) is exposed to the outside. The operation panel 40 is operated to start the operation of the floor-mount type air filtering apparatus 1. When this operation is started, the circulating pump 13 is driven, and water (tap water or the like) stocked in the water supply tank support tray 10 is supplied to the electrolytic bath 31 as shown in Fig. 5A. In this electrolytic bath 31, current is supplied to the electrodes 32, 33 to electrolyze the water, thereby generating electrolytic water containing active oxygen specifies. The electrolytic water is passed through the water spray holes (not shown) formed in the electrolytic water supply tube 17, and sprayed into the diffusion holes 5C. Then, the electrolytic water infiltrates into the upper edge portion of the gas-liquid contact member 5 from the diffusion holes 5C and then gradually infiltrates to the lower portion.

The electrolytic water dropped from the gas-liquid contact member 5 is received by the water receiving tray 9, flows along a slant face at one side thereof into the water supply tank support tray 10 and is stocked there. In this construction, a water circulating system is used, and thus when the amount of water is reduced due to vaporization or the like, a proper amount of water such as tap water in the water supply tank 11 is supplied to the water supply tank support tray 10. The water supply tank 11 is disposed so as to be freely detached when the open/close lid 2E (see Fig. 1) is opened, so that it can be supplemented with water such as tap water or the like by detaching the water supply tank 11.

As indicated by an arrow X, indoor air is supplied through the air blowing an 7 to the gas-liquid contact member 5 into which the electrolytic water infiltrates. The indoor air comes into contact with or passes in the neighborhood of the active oxygen specifies infiltrating in the gas-liquid contact member 5, and then blown out to the room again. The active oxygen specifies have a function of suppressing virus and allergic materials such as pollen, capoop, corpse, etc. of mites, and for example when influenza virus floats in indoor air, the active oxygen species function to break down and vanish (remove) the surface protein (spike) of the virus concerned which is indispensable for infection. When the surface protein of influenza virus is broken down, the influenza virus is not joined to a receptor which is necessary for infection of the virus concerned, so that infection can be prevented. As a result of a verification test, it has been found that when air in which influenza virus floats is passed through the gas-liquid contact member 5 of this embodiment, 99% or more of the virus concerned can be removed.

Water before electrolysis (pre-electrolysis water) and water after electrolysis (post-electrolysis water) are greatly different from each other in the concentration of hypochlorous acid. Therefore, under the same electrolysis operation, dispersion occurs in the concentration, and it is impossible to carry out stable air filtering operation. Furthermore, the concentration of hypochlorous acid is lowered not only when water exchange is carried out, but also with time lapse. Therefore, some dispersion occurs in the concentration of hypochlorous acid in the electrolytic water circulated in the air filtering mechanism 12 even under the same electrolysis operation between the case where the electrolysis stop time t0 is short and the case where the electrolysis stop time t0 is long, so that it is impossible to carry out stable air filtering operation.

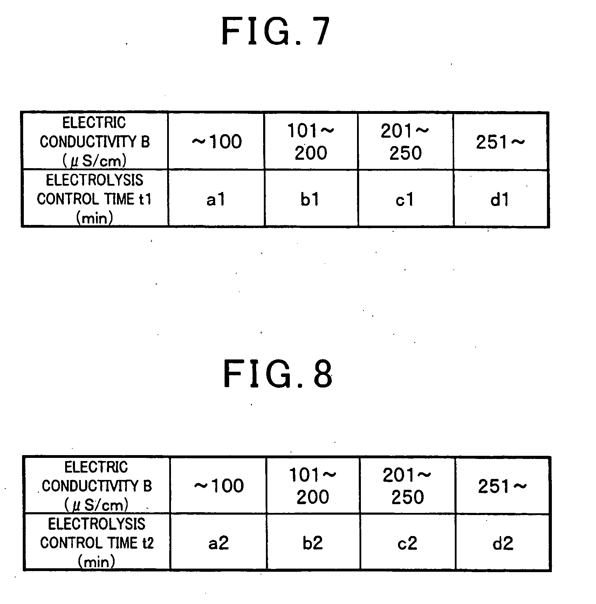

Fig. 7 shows a table data T1 showing the corresponding relationship between the electric conductivity B of water before electrolysis and an electrolysis control time t1. The electrolysis control time t1 is a time in which a target concentration of hypochlorous acid can be generated by electrolyzing water having the electric conductivity B before electrolysis, and this relationship is determined by experiments or the like. In this construction, the electrolysis control time t1 when the electric conductivity is not more than 100 (µS/cm) is set to a value a1, the electrolysis control time t1 when the electric conductivity is in the range from 101 to 200 (µS/cm) is set to a value b1, the electrolysis control time t1 when the electric conductivity is in the range from 201 to 250 (µS/cm) is set to a value c1, and the electrolysis control time t1 when the electric conductivity is not less than 251 (µS/cm) is set to a value d1, and the table data T1 is stored in a storage portion 35.

Furthermore, Fig. 8 shows a table data T2 showing the corresponding relationship between the electric conductivity B of water after electrolysis and an electrolysis control time t2. The electrolysis control time t2 is a time in which a target concentration of hypochlorous acid can be generated by electrolyzing water having the electric conductivity B before electrolysis, and this relationship is determined by an experiment or the like. In this construction, the electrolysis control time t2 when the electric conductivity is not more than 100 (µS/cm) is set to a value a2, the electrolysis control time t2 when the electric conductivity is in the range from 101 to 200 (µS/cm) is set to a value b2, the electrolysis control time t2 when the electric conductivity is in the range from 201 to 250 (µS/cm) is set to a value c2, and the electrolysis control time t2 when the electric conductivity is not less than 251 (µS/cm) is set to a value d2, and the table data T2 is stored in a storage portion 35.

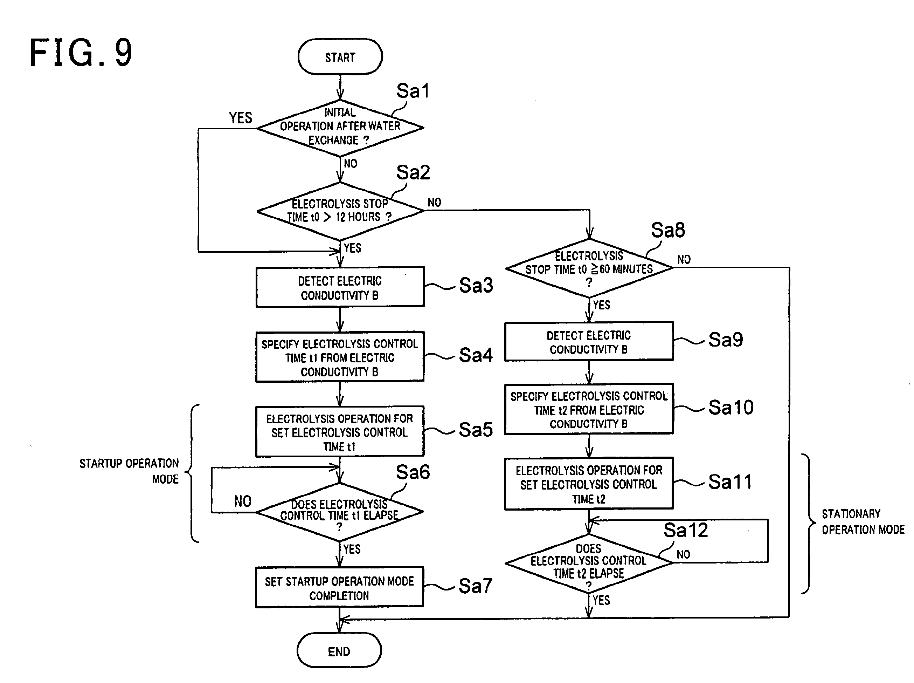

Fig. 9 is a flowchart showing the operation processing when the operation mode of the controller 30 is switched. This operation processing is repetitively executed when the power source of the floor mount type air filtering apparatus 1 is turned on. Here, the operation mode is an operation mode for electrolysis, and it contains a startup operation mode in which the electrolysis control time t1 is set on the basis of the table data T1 shown in Fig. 7 and electrolysis is carried out for only the electrolysis control time t1, and a stationary operation mode in which the electrolysis control time t2 is set on the basis of the table data T2 shown in Fig. 8 and electrolysis is carried out for only the electrolysis control time t2.

First, when the power source of the floor mount type air filtering apparatus 1 is turned on, the controller 30 judges whether this operation is an initial operation after water is exchanged (step Sa1). This judgment is carried out on the basis of ON/OFF of a startup operation completion flag stored in the storage portion 35 described later. When it is not the initial operation (step Sa1 : No), the controller 30 judges whether the a predetermined time (in this embodiment, 12 hours) in which the concentration of active oxygen specifies is estimated to be substantially the same level as water before electrolysis elapses or not (step Sa2).

When it is judged in step Sa1 that the operation is the initial operation after water is exchanged (step Sa1: Yes), or when it is judged in step Sa2 that the electrolysis stop time t0 is longer than 12 hours (step Sa2: Yes), the concentration of hypochlorous acid is estimated to be the same level as the water before electrolysis, so that the controller 30 executes the following processing of determining the electrolysis control time t1 suitable for the water before electrolysis.

That is, the controller 30 detects the electric conductivity B of water supplied to the electrolytic bath 31 by the circulating pump 13 by using the electrodes 32, 33 *step Sa3), and refers to the table data T1 stored in the storage portion 35 to specify the electrolysis control time t1 corresponding to the detected electric conductivity B (step Sa4).

When the electrolysis control time t1 is specified, the controller 30 starts the electrolysis operation in the startup operation mode (step Sa5), that is, supplies power to the electrodes 32, 33 until the electrolysis control time t1 elapses (step Sa6).

When the electrolysis control time t1 elapses and the electrolysis operation based on the startup operation mode is finished, the controller 30 sets the startup operation completion flag stored in a predetermined area of the storage portion 35 to the ON-state (step Sa7). ON of the startup operation completion flag indicates that the startup operation mode is completed, and when the user exchanges water circulating in the air filtering mechanism 12 and operates the water exchange button switch provided to the operation panel 40, the controller 30 sets the startup operation completion flag to OFF.

On the other hand, if it is judged in step Sa2 that the electrolysis stop time t0 is equal to 12 hours or less (step Sa2: No), it is estimated that the concentration of hypochlorous acid is higher than that of water before electrolysis, and the controller 30 judges whether the electrolysis stop time t0 is equal to 60 minutes or more (step Sa8). If it is judged that the electrolysis stop time t0 is less than 6 minutes (step Sa8: No), it is estimated that the concentration of hypochlorous acid satisfies the target concentration, and thus the controller 30 finishes a series of processing.

On the other hand, when the electrolysis stop time t0 is equal to 60 minutes or more (step Sa8: Yes), it is estimated that the concentration of hypochlorous acid does not satisfy the target concentration, and thus the controller 30 executes the following processing of determining the electrolysis control time t2 suitable for the concentration of hypochlorous acid satisfying the target concentration.

That is, the controller 30 detects the electric conductivity B of water supplied to the electrolytic through the circulating pump 13 by using the electrodes 32, 33 (step Sa9), and refers to the table data T2 stored in the storage portion 35 to specify the electrolysis control time t2 corresponding to the detected electric conductivity B (step Sa10).

When the electrolysis control time t2 is specified, the controller 30 starts the electrolysis operation in the stationary operation mode (step Sal1), that is, supplies power to the electrodes 32 and 33 until the electrolysis control time t2 elapses (step Sa12).

As described above, according to this embodiment, when water is exchanged or when the lapse time from the previous electrolysis operation is long, the operation is carried out in the startup operation mode optimum to water before electrolysis. Furthermore, when the lapse time from the previous electrolysis operation is short, the operation is carried out in the stationary operation mode optimum to water after electrolysis. Therefore, the concentration of hypochlorous acid contained in electrolytic water can be controlled to the target concentration with high precision, and the dispersion of the concentration of hypochlorous acid can be suppressed. Accordingly, the stable air filtering capability can be secured.

Furthermore, the electric conductivity of electrolytic water is detected, and the concentration of hypochlorous acid which corresponds to the detected electric conductivity is estimated. Therefore, the concentration of hypochlorous acid contained in electrolytic water can be controlled to the target concentration with high precision.

The present invention is not limited to the above-described embodiment. For example, the air filtering apparatus of the present invention may be designed so that ozone (O₃) or hydrogen peroxide (H₂O₂) is generated as the active oxygen species. In this case, when platinum tantalum electrodes are used as the electrodes, active oxygen species can be highly efficiently and stably generated from water in which ion species are rare.

At this time, at the anode, the following reaction occurs:

2H₂O → 4H⁺ + O₂ + 4e⁻

Simultaneously with the above reaction, the following reactions occur, and ozone (O₃) is generated.

3H₂O → O₃ + 6H⁺ + 6e⁻

2H₂O → O₃ + 4H⁺ + 4e⁻

Furthermore, at the cathode, the following reactions occur:

4H⁺ + 4e⁻ + (40H⁻) → 2H₂ + (40H⁻)

O₂- + e⁻ + 2H⁺ → H₂O₂

That is, O₂⁻ generated through the electrode reaction and H⁺ in solution are bonded to each other to generate hydrogen peroxide (H₂O₂).

In this construction, ozone (O₃) and hydrogen peroxide (H₂O₂) which have strong sterilizing power are generated by supplying current to the electrodes, and electrolytic water containing ozone (O₃) and hydrogen peroxide (H₂O₂) can be created. The concentration of ozone or hydrogen peroxide in the electrolytic water is adjusted to a value suitable for inactivate target virus or the like and air is passed through the gas-liquid contact member 5 supplied with the electrolytic water having this concentration, whereby target virus, etc. floating in the air can be inactivated. Furthermore, even odor reacts with ozone or hydrogen peroxide in the electrolytic water when passing through the gas-liquid contact member 5, and ionized and dissolved in the electrolytic water, whereby the odor components are removed from the air and thus the air is deodorized.

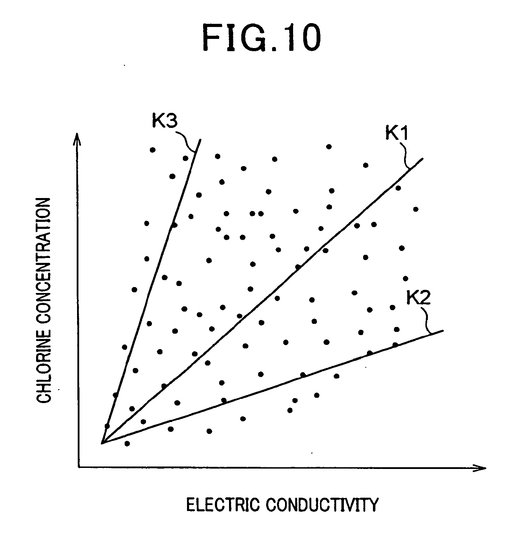

In the above-described embodiment, the table data T1, T2 in which the electrolytic control time t1, t2 is described every range of electrical conductivity B. However, the present invention is not limited to this embodiment. For example, a calculation equation for achieving the electrolysis control times t1, t2 from the electric conductivity B may be stored so that the electrolysis control times t1, t2 are specified on the basis of the calculation equation. Here, as shown in Fig. 10, the chlorine concentration and the electric conductivity of tap water vary among local regions, and thus it is difficult to specify one calculation equation for specifying the electrolysis control times t1, t2 from the electric conductivity B. In this case, as shown in Fig. 10, the dispersion range of tap water in the respective local regions is specified, the average characteristic curved line K1 in this range may be regarded as the characteristic of tap water, and the calculation equation is specified from this characteristic curved line K1.

Here, with respect to the characteristic curved line K1, the chlorine concentration is regarded as an average value, and thus according to the calculation equation achieved from the characteristic curve line K1, electrolytic water containing active oxygen specifies whose concentration is the target concentration can be averagely achieved.

Furthermore, a characteristic curved line K2 along the lower edge of the range may be regarded as the characteristic of tap water, and the calculation equation may be specified from this characteristic curved line K2. With respect to the characteristic curved line K2, the chlorine concentration is regarded as being rather low, and thus according to the calculation equation achieved from this characteristic curved line K2, at least electrolytic water in which the concentration of active oxygen specifies is equal to the target concentration or more can be achieved.

Still furthermore, a characteristic curved line K3 along the upper edge of the range may be regarded as the characteristic of tap water, and the calculation equation may be specified from the characteristic curved line K3. With respect to the characteristic curved line K3, the chlorine concentration is regarded as being rather high, and thus according to the calculation equation achieved from the characteristic curved line K3, the electrolysis control time t1, t2 can be shortened.

In the above-described embodiment, the electrolysis control time is changed and the concentration of active oxygen specifies contained in various kinds of water is controlled to approach to the target concentration. However, the present invention is not limited to this embodiment. For example, power such as a current value or the like supplied to the electrodes 32, 33 may be changed.

## Claims

1. An air filtering apparatus comprising:
air filtering means (12) for generating electrolytic water containing active oxygen specifies by electrolyzing water, supplying the electrolytic water to a gas-liquid contact member, blowing indoor air to the gas-liquid contact member so as to be brought into contact with the electrolytic water, and blowing out the indoor air to a room; and **characterized in that** it comprises
switching means (30) switching an operation mode of electrolysis between a first operation mode electrolyzing pre-electrolysis water so that the concentration of the active oxygen specifies approaches to a target concentration, and a second operation mode electrolyzing post-electrolysis water so that the concentration of the active oxygen specifies approaches to a target concentration.

2. The air filtering apparatus according to claim 1, further comprisingwater exchange detectingmeans (30) for detecting whether water in the air filtering means is exchanged or not, wherein the switching means sets the operation mode for electrolysis to the first operation mode in the initial operation after it is detected by the water exchange detecting means that water is exchanged.

3. The air filtering apparatus according to claim 1, wherein the switching means sets the operation mode for electrolysis to the first operationmode when a lapse time from the previous electrolysis elapses a predetermined time at which it is estimated that the concentration of the active oxygen specifies is the same level as the pre-electrolysis water.

4. The air filtering apparatus according to claim 1, wherein the switching means sets the operation mode for electrolysis to the second operation mode when a lapse time from the previous electrolysis elapses a predetermined time at which it is estimated that the concentration of the active oxygen specifies is larger than that of the pre-electrolysis water and also smaller than the target concentration.

5. The air filtering apparatus according to claim 1, further comprising the electric conductivity of water in the air filtering means (30), and storing means (35) for storing first information to specify a control time for generating the active oxygen specifies of the target concentration from the electric conductivity of the pre-electrolysis water, and second information to specify a control time for generating the active oxygen specifies of the target concentration from the electric conductivity of the post-electrolysis water, wherein in the first operation mode, the water in the air filtering means is electrolyzed for the control time based on the first information, and in the second operation mode the water in the air filtering means is electrolyzed for the control time based on the second information.

6. A method of controlling an air filtering apparatus for generating electrolytic water containing active oxygen specifies by electrolyzing water,supplying the electrolytic water to a gas-liquid contact member, blowing indoor air to the gas-liquid contact member so that the indoor air is brought into contact with the electrolyticwater, and blowing out the indoor air to a room, comprising a step of switching an operation mode for electrolysis between afirstoperation mode for electrolyzing pre-electrolysis water so that the concentration of the active oxygen specifies approaches to a target concentration, and a second operation mode for electrolyzing post-electrolysis water so that the concentration of the active oxygen specifies approaches to a target concentration.

## Patentansprüche

1. Luftfiltergerät mit:
einer Luftfiltereinrichtung (12) zum Erzeugen von elektrolytischem Wasser, das aktive Sauerstoffspezies enthält, durch Elektrolysieren von Wasser, Zuführen des elektrolytischen Wassers an ein Gas-Flüssigkeits-Kontaktelement, Blasen von Innenluft auf das Gas-Flüssigkeits-Kontaktelement derart, dass sie in Kontakt mit dem elektrolytischen Wasser gebracht wird, und Ausblasen der Innenluft in einen Raum, und **dadurch gekennzeichnet, dass** es aufweist
Schaltmittel (30), die einen Betriebsmodus der Elektrolyse zwischen einem ersten Betriebsmodus schalten, in dem vorelektrolysiertes Wasser elektrolysiert wird, so dass die Konzentration der aktiven Sauerstoffspezies sich einer Zielkonzentration nähert, und einem zweiten Betriebsmodus, in dem nachelektrolysiertes Wasser elektrolysiert wird, so dass die Konzentration der aktiven Sauerstoffspezies sich einer Zielkonzentration nähert.

2. Luftfiltergerät nach Anspruch 1 mit ferner einer Wasseraustauschdetektoreinrichtung (30) zum Erfassen, ob Wasser in der Luftfiltereinrichtung ausgetauscht ist oder nicht, wobei die Schaltmittel den Betriebsmodus für die Elektrolyse auf den ersten Betriebsmodus im Anfangsbetrieb schalten, nachdem durch die Wasseraustauschdetektoreinrichtung erfasst wurde, dass das Wasser ausgetauscht ist.

3. Luftfiltergerät nach Anspruch 1, wobei die Schaltmittel den Betriebsmodus für die Elektrolyse auf den ersten Betriebsmodus einstellen, wenn eine Ablaufzeit von der vorhergehenden Elektrolyse zu einer vorgegebenen Zeit abgelaufen ist, zu der abgeschätzt wird, dass die Konzentration der aktiven Sauerstoffspezies auf dem selben Wege ist wie das vorelektrolysierte Wasser.

4. Luftfiltergerät nach Anspruch 1, wobei die Schaltmittel den Betriebsmodus für die Elektrolyse auf den zweiten Betriebsmodus einstellen, wenn eine Ablaufzeit von der vorhergehenden Elektrolyse zu einer vorgegebenen Zeit abgelaufen ist, zu der abgeschätzt wird, dass die Konzentration der aktiven Sauerstoffspezies größer ist als die des Vorelektrolysewassers und auch geringer ist als die Zielkonzentration.

5. Luftfiltergerät nach Anspruch 1 mit ferner einer Filtereinrichtung (30) für die elektrische Leitfähigkeit von Wasser in Luft und einer Speichereinrichtung (35) zum Speichern einer ersten Information zur Angabe einer Steuerzeit zur Erzeugung der aktiven Sauerstoffspezies mit der Zielkonzentration von der elektrischen Leitfähigkeit des Vorelektrolysewassers und einer zweiten Information zur Angabe einer Steuerzeit zur Erzeugung der aktiven Sauerstoffspezies mit der Zielkonzentration aus der elektrischen Leitfähigkeit des Nachelektrolysewassers, wobei in dem ersten Betriebsmodus das Wasser in der Luftfiltereinrichtung für die Steuerzeit, die auf der ersten Information basiert, elektrolysiert wird, und in dem zweiten Betriebsmodus das Wasser in der Luftfiltereinrichtung für die Steuerzeit, die auf der zweiten Information basiert, elektrolysiert wird.

6. Verfahren zum Steuern eines Luftfiltergerätes zum Erzeugen von elektrolytischem Wasser, das aktive Sauerstoffspezies enthält, durch Elektrolysieren von Wasser, Zuführen des elektrolytischen Wassers an ein Gas-Flüssigkeits-Kontaktelement, Blasen von Innenraumluft auf das Gas-Flüssigkeits-Kontaktelement derart, dass die Innenluft in Kontakt mit dem elektrolytischen Wasser gebracht wird, und Ausblasen der Innenluft in einen Raum, mit einem Schritt des Schaltens eines Betriebsmodus für die Elektrolyse zwischen einem ersten Betriebsmodus zum Elektrolysieren von Vorelektrolysewasser derart, dass die Konzentration der aktiven Sauerstoffspezies sich einer Zielkonzentration nähert, und einem zweiten Betriebsmodus zum Elektrolysieren von Nachelektrolysewasser derart, dass die Konzentration der aktiven Sauerstoffspezies sich einer Zielkonzentration nähert.

## Revendications

1. Dispositif de filtrage d'air comprenant :
un moyen de filtrage d'air (12) destiné à produire de l'eau électrolytique contenant des éléments à base d'oxygène actif par électrolyse de l'eau, introduction d'eau électrolytique dans un élément de contact gaz-liquide, soufflage de l'air interne vers l'élément de contact gaz-liquide de manière à l'entraîner en contact avec l'eau électrolytique, et extraction de l'air interne vers une pièce ; et **caractérisé en ce qu'**il comprend
un moyen de commutation (30) destiné à assurer la commutation d'un mode de fonctionnement d'électrolyse entre un premier mode de fonctionnement d'électrolyse d'eau préalablement à l'électrolyse de telle sorte que la concentration des éléments à base d'oxygène actif se rapproche d'une concentration de consigne, et un second mode de fonctionnement d'électrolyse d'eau après électrolyse de telle sorte que la concentration des éléments à base d'oxygène actif se rapproche d'une concentration de consigne.

2. Dispositif de filtrage d'air selon la revendication 1, comprenant, en outre, un moyen de détection de remplacement d'eau (30) destiné à détecter si l'eau dans le moyen de filtrage d'air a été remplacée ou non, dans lequel le moyen de commutation positionne le mode de fonctionnement d'électrolyse dans le premier mode de fonctionnement en fonctionnement initial après qu'il a été détecté par le moyen de détection de remplacement d'eau que l'eau a été remplacée.

3. Dispositif de filtrage d'air selon revendication 1, dans lequel le moyen de commutation positionne le mode de fonctionnement d'électrolyse sur le premier mode de fonctionnement lorsqu'un certain temps après la précédente électrolyse il s'est écoulée une durée prédéterminée après laquelle il est estimé que la concentration des éléments à base d'oxygène actif est au même niveau que l'eau préalablement à l'électrolyse.

4. Dispositif de filtrage d'air selon revendication 1, dans lequel le moyen de commutation positionne le mode de fonctionnement d'électrolyse sur le second mode de fonctionnement lorsqu'un certain temps après la précédente électrolyse il s'est écoulé une durée prédéterminée après laquelle il est estimé que la concentration des éléments à base d'oxygène actif est supérieure à celle de l'eau préalablement à l'électrolyse et aussi inférieure à la concentration de consigne.

5. Dispositif de filtrage d'air selon la revendication 1, comprenant, en outre, la conductivité électrique de l'eau dans le moyen de filtrage d'air (30), et un moyen de stockage (35) destiné à stocker une première information afin de spécifier une durée de commande pour la production des éléments à base d'oxygène actif de la concentration de consigne à partir de la conductivité électrique de l'eau préalablement à l'électrolyse, et une seconde information afin de spécifier une durée de commande pour la production des éléments à base d'oxygène actif de la concentration de consigne à partir de la conductivité électrique de l'eau après électrolyse, dans lequel, dans le premier mode de fonctionnement, l'eau dans le moyen de filtrage d'air est électrolysée pendant la durée de commande sur la base de la première information, et dans le second mode de fonctionnement l'eau dans le moyen de filtrage d'air est électrolysée pendant la durée de commande sur la base de la seconde information.

6. Procédé de commande d'un dispositif de filtrage d'air afin de produire de l'eau électrolytique contenant des éléments à base d'oxygène actif, par électrolyse de l'eau, introduction de l'eau électrolytique sur un élément de contact gaz-liquide, soufflage de l'air interne vers l'élément de contact gaz-liquide de telle sorte que l'air interne soit amené en contact avec l'eau électrolytique, et extraction de l'air interne vers une pièce, comprenant une étape de commutation d'un mode de fonctionnement d'électrolyse entre un premier mode de fonctionnement d'électrolyse de l'eau préalablement à l'électrolyse de telle sorte que la concentration des éléments à base d'oxygène actif se rapproche d'une concentration de consigne, et un second mode de fonctionnement d'électrolyse de l'eau après électrolyse de telle sorte que la concentration des éléments à base d'oxygène actif se rapproche d'une concentration de consigne.
